# EUROPÄISCHE PATENTSCHRIFT

(11) **EP 2 191 296 B1**
(45) Veröffentlichungstag und Bekanntmachung des Hinweises auf die Patenterteilung: **20.02.2013**
(21) Anmeldenummer: 08803774.2
(22) Anmeldetag: 05.09.2008
(51) Int. Cl.: G01S 13/90, G01S 13/00, G01S 13/88

(54) **VERFAHREN UND VORRICHTUNG ZUR SYNTHETISCHEN BILDGEBUNG**
METHOD AND DEVICE FOR SYNTHETIC IMAGING
PROCEDE ET DISPOSITIF DE FORMATION D'IMAGES A SYNTHESE D'OUVERTURE

(30) Priorität: 20.09.2007 DE 102007045103
(43) Veröffentlichungstag der Anmeldung: 02.06.2010
(73) Patentinhaber: SynView GmbH, 61348 Bad Homburg (DE)
(72) Erfinder: KROZER, Viktor, 60431 Frankfurt (DE)
(74) Vertreter: WSL Patentanwälte Partnerschaftsgesellschaft
(86) Internationale Anmeldenummer: PCT/EP2008/061805
(87) Internationale Veröffentlichungsnummer: WO 2009/040233

(56) Entgegenhaltungen:
- EP-A1- 0 050 060
- WO-A-2007/041024
- DE-A1-102005 016 106
- US-A- 3 909 827
- US-A- 4 068 234
- US-A1- 2004 140 924
- US-B1- 6 885 191

## Beschreibung

Die vorliegende Erfindung betrifft ein Verfahren und eine Vorrichtung zur synthetischen Bildgebung.

Das Prinzip der synthetischen Bildgebung, welche häufig auch als Bildgebung mit synthetischer Apertur bezeichnet wird, besteht darin, die Momentaufnahme einer Antenne oder eines Objektivs mit großer Apertur durch eine Mehrzahl von zeitlich aufeinanderfolgenden Aufnahmen einer bewegten Antenne oder eines bewegten Objektivs mit kleiner Apertur oder auch durch eine Mehrzahl von zeitlich aufeinanderfolgenden Aufnahmen einer Mehrzahl ortsfester Antennen oder ortsfester Objektive mit kleiner Apertur zu ersetzen.

Das bekannteste System zur synthetischen Bildgebung ist das sogenannte Synthetic Aperture Radar (kurz: SAR). Dabei werden die Sende- und die Empfangsantenne eines Radarsystems, welches beispielsweise auf einem Flugzeug montiert ist, an einem Objekt vorbei bewegt. Im Verlauf dieser Bewegung wird das Objekt unter veränderlichem Blickwinkel angestrahlt und entsprechend aufgenommen. Sofern der Weg der Sende- und Empfangsantennen hinreichend bekannt ist, kann aus Intensität und Phasenlage des von der Sendeantenne ausgestrahlten und von dem Objekt zurück in die Empfangsantenne reflektierten Hochfrequenzsignals die Apertur einer großen Antenne synthetisiert und somit eine hohe Ortsauflösung in Bewegungsrichtung der Antenne erzielt werden. Mit Hilfe der aufgezeichneten Daten des reflektierten Radarsignals wird für jeden von der Sendeantenne im Verlauf des Vorbeifluges angestrahlten Ort eine eigene synthetische Antenne berechnet, deren Winkelauflösung im Azimut so gewählt wird, dass für alle betrachteten Entfernungen die geometrische Auflösung in Flug- bzw. Bewegungsrichtung gleich ist.

Für stationäre Anwendungen, beispielsweise zur Überwachung von Personen mit Hilfe von Hochfrequenzstrahlung im Megahertz- und Gigahertz-Frequenzbereich sind Systeme bekannt, die statt eines einzigen Paares von Sende- und Empfangsantennen, die sich relativ zu dem Objekt in Bewegung befinden, eine Vielzahl von Sende- und Empfangsantennen verwenden, welche das Objekt unter unterschiedlichen Winkeln abbilden und deren Signale nach dem SAR-Prinzip ausgewertet werden. Dabei können zum Empfang der von einem Objekt reflektierten oder durch dieses transmittierten Wellen entweder die Sendeantennen selbst oder getrennte Empfangsantennen verwendet werden. Um eine möglichst gute räumliche Auflösung zu erhalten wird das von einer einzigen Sendeantenne ausgestrahlte Signal mit einer Vielzahl von Empfangsantennen empfangen.

Dazu sind aus dem Stand der Technik, beispielsweise der DE 10 2005 016 106 A1, der WO 2007/041024 oder der US 3,909,827 Systeme und Verfahren der Bildgebung mit synthetischer Apertur bekannt, welche die von den einzelnen Sendeantennen abgestrahlten Signale nach ihrer Reflektion von einem Objekt oder ihrer Transmission durch ein Objekt beim Empfang auf einer Mehrzahl von Empfängern voneinander unterscheiden. Dabei strahlen die einzelnen Sendeantennen ihre Signale, welche alle die gleiche Frequenz aufweisen zeitlich nacheinander ab, d.h. die Signalabstrahlung von den einzelnen Sendern erfolgt seriell. Bei diesem Verfahren kann zu jedem Zeitpunkt das an jedem Empfänger empfangene Signal eindeutig einem Sender zugeordnet werden, wobei jedoch die serielle Aktivierung der Sender eine vergleichsweise lange Messzeit mit sich bringt.

Die europäische Patentanmeldung EP 0 050 060 A1 offenbart ein Verfahren zur Ultraschallbildgebung, bei welchem verschiedene Ultraschallwandler voneinander verschiedene Frequenzen abstrahlen.

Demgegenüber ist es die Aufgabe der vorliegenden Erfindung, ein Verfahren und ein System zur synthetischen Bildgebung bereitzustellen, bei welchem die Messzeit gegenüber dem Stand der Technik deutlich reduziert ist.

Diese Aufgabe wird erfindungsgemäß durch ein Verfahren zur synthetischen Bildgebung gelöst, das folgende Schritte aufweist: Abstrahlen eines ersten elektromagnetischen Signals mit einer ersten Frequenz von einer ersten Strahlungsquelle, Abstrahlen mindestens eines zweiten elektromagnetischen Signals mit einer zweiten Frequenz von einer zweiten Strahlungsquelle, wobei die erste und die zweite Frequenz voneinander verschieden sind und im Wesentlichen gleichzeitiges Empfangen des ersten Signals und des zweiten Signals mit einem ersten Empfänger und im wesentlichen gleichzeitiges Empfangen des ersten Signals und des zweiten Signals mit mindestens einem zweiten Empfänger, wobei die mindestens zwei Strahlungsquellen und die mindestens zwei Empfänger räumlich getrennt voneinander angeordnet sind, wobei das Empfangen des ersten Signals und des zweiten Signals mit einem ersten Empfänger und einem zweiten Empfänger die folgenden Schritte aufweist: Erzeugen eines einzigen Radiofrequenzsignals, Mischen des Radiofrequenzsignals in dem ersten Empfänger mit dem ersten und dem zweiten Signal zu einem ersten Satz von Empfängerzwischenfrequenzsignalen und Mischen des Radiofrequenzsignals in dem zweiten Empfänger mit dem ersten und dem zweiten Signal zu einem zweiten Satz von Empfängerzwischenfrequenzsignalen, Zerlegen und Auswerten der spektralen Frequenzbestandteile eines Satzes von Empfängerzwischenfrequenzsignalen mit einem Demultiplexer in einem Rechner und Berechnen eines Bildes, das mit einer synthetischen Apertur gewonnen wurde, in dem Rechner aus den Empfängerzwischenfrequenzsignalen und Abspeichern des Bildes oder Anzeigen des Bildes auf einem Bildschirm.

Das erfindungsgemäße Verfahren codiert die von den einzelnen Sendern abgestrahlten elektromagnetischen Signale mit Hilfe der Frequenz der abgestrahlten Signale. Da es in einer Ausführungsform keine zwei Strahlungsquellen mit identischer Frequenz des jeweils abgestrahlten elektromagnetischen Signals gibt, ist jedes von einem Empfänger empfangene Signal eindeutig einer einzigen Strahlungsquelle zuordenbar.

Da jeder der Empfänger gleichzeitig das erste Signal und das zweite Signal empfängt, kann aus den empfangenen Signalen in kurzer Zeit eine große Apertur synthetisiert und ein Bild mit hoher Auflösung berechnet werden.

Im Sinne der vorliegenden Erfindung wird unter der Frequenz der elektromagnetischen Signale deren Trägerfrequenz und nicht etwa deren Modulationsfrequenz verstanden.

Dabei ist das erfindungsgemäße Verfahren nicht auf das Abstrahlen und das Empfangen zweier Signale beschränkt, sondern in einer Ausführungsform der Erfindung werden mehr als zwei Signale abgestrahlt und empfangen. Dabei weisen vorzugsweise alle abgestrahlten Signale voneinander verschiedene Frequenzen auf.

In einer Ausführungsform sind der erste und der zweite Empfänger phasenstarr miteinander gekoppelt unabhängig davon, ob die Strahlungsquellen und die Empfänger phasengekoppelt sind oder nicht. Auf diese Weise kann die Erfassung der elektromagnetischen Signale interferometrisch erfolgen, wobei zur Bilderzeugung interferometrische Algorithmen verwendet werden, welche die Phasendifferenzen der elektromagnetischen Signale zwischen den einzelnen Empfängern berücksichtigen.

Darüber hinaus sind in einer Ausführungsform der erste und der zweite Empfänger mit den Strahlungsquellen phasengekoppelt.

In einer Ausführungsform liegen die von den Strahlungsquellen abgestrahlten elektromagnetischen Signale in einem Frequenzbereich von 800 MHz bis 10 THz, vorzugsweise von 30 GHz bis 1 THz und besonders bevorzugt bei etwa 100 GHz. Bei diesen Frequenzen treten große Unterschiede im Reflektions- bzw. Transmissionsverhalten verschiedener Materialien auf, welche beispielsweise bei der Personenüberwachung eine Rolle spielen. Metall, z. B. die Oberfläche einer Schuss- oder Stichwaffe, hat in diesem Frequenzbereich eine hohe Reflektivität, während biologisches Material, z. B. die Hautoberfläche des Waffenträgers, ausgeprägte Absorptionsfenster in diesem Frequenzbereich aufweist.

Das erfindungsgemäße Verfahren eignet sich dabei insbesondere für die Abstrahlung eines elektromagnetischen Dauerstrichsignals (CW-Signal).

In einer Ausführungsform kann die Frequenz der abgestrahlten elektromagnetischen Dauerstrichsignale über die Messzeit hinweg konstant gehalten werden. Alternativ kann die Frequenz der Signale über die Messzeit hinweg verändert werden, unter der Voraussetzung, dass zu keinem Zeitpunkt zwei Signale die gleiche Frequenz aufweisen, um über die gesamte Messzeit hinweg eine eindeutige Zuordnung der einzelnen von den Empfängern empfangenen Signale zu den jeweiligen Strahlungsquellen zu ermöglichen.

In einer Ausführungsform erfolgt auch das Abstrahlen des ersten und des zweiten Signals im Wesentlichen gleichzeitig. Aufgrund der eindeutigen Frequenzcodierung der von den einzelnen Strahlungsquellen abgestrahlten elektromagnetischen Signale können trotz gleichzeitiger Abstrahlung der Signale diese eindeutig den abstrahlenden Strahlungsquellen zugeordnet werden.

In einer weiteren Ausführungsform weist das erfindungsgemäße Verfahren zusätzlich die folgenden Schritte auf: Anordnen eines Objektes auf dem Pfad mindestens eines elektromagnetischen Signals zwischen einer Strahlungsquelle und mindestens zwei Empfängern und Berechnen eines Bildes des Objektes aus den von den Empfängern empfangenen Signalen.

Dabei kann das Objekt, beispielsweise eine zu überwachende Person oder ein zu prüfender Gegenstand, derart zwischen den Strahlungsquellen und den Empfängern angeordnet werden, dass die von den Strahlungsquellen abgestrahlten Signale zumindest teilweise von dem Objekt reflektiert werden, bevor sie von den Empfängern empfangen werden. Eine solcher Betrieb in Reflexionsgeometrie weist insbesondere den Vorteil auf, dass bei der Sicherheitsüberwachung von Personen die Signale nicht durch die Personen selbst, d.h. die menschlichen Körper, abgeschwächt werden.

Alternativ oder zusätzlich kann das Objekt derart zwischen den Strahlungsquellen und den Empfängern angeordnet werden, dass die von den Strahlungsquellen abgestrahlten Signale sich zumindest teilweise durch das Objekt ausbreiten, bevor sie von den Empfängern empfangen werden (Transmissionsgeometrie).

Die Berechnung eines Bildes des Objektes aus den von den Empfängern empfangenen Signalen erfolgt mit Hilfe von Algorithmen, so wie sie für Bildgebungsverfahren mit synthetischer Apertur bzw. zur interferometrischen Radarbildgebung oder interferometrischen Radioastronomie typischerweise verwendet werden.

Dabei werden in einer Ausführungsform die Prinzipien der synthetischen Bildgebung anwendend, die gleichzeitig von mindestens zwei Empfängern empfangenen Signale einer einzigen Strahlungsquelle zu einem ersten synthetischen Bild einer einzigen virtuellen Antenne mit einer großen synthetischen Apertur verarbeitet. Diese Erzeugung eines synthetischen Bildes erfolgt dabei dann gleichzeitig auch für alle Signale, die von den weiteren Strahlungsquellen abgestrahlt werden.

Lehrreich für das Verständnis des bildgebenden Prinzips des erfindungsgemäßen Verfahrens und der entsprechenden Vorrichtung ist ein Vergleich mit dem in der Einleitung erwähnten Radar mit synthetischer Apertur, wobei das Radar-System auf einem Flugzeug montiert ist. Das erfindungsgemäße System ermöglicht es in diesem Sinne, das Objekt gleichzeitig aus mehreren Positionen entlang der Flugrichtung zu bestrahlen und/oder die von dem Objekt reflektierte oder durch das Objekt transmittierte Strahlung gleichzeitig an mehreren Positionen entlang der Flugrichtung zu empfangen. Dabei wird die Bewegung des Radarsystems gegenüber dem Objekt durch die räumlich getrennte Anordnung von mindestens zwei Strahlungsquellen und von mindestens zwei Empfänger ersetzt. Gleichzeitig kann jedoch in einer Ausführungsform eine Relativbewegung zwischen Objekt und Strahlungsquellen bzw. Empfängern auftreten.

Entsprechende Bildgebungsalgorithmen sind beispielsweise aus dem Buch von Mehrdad Soumekh "Fourier Array Imaging", Prentice Hall, PTR, Auflage: Januar 1994, ISBN-1 0: 0130637696 bekannt, dessen Inhalt, soweit er die Algorithmen zur Bildgebung betrifft, vollständig durch Bezugnahme aufgenommen wird. Die hierin als Bildgebung mit synthetischer Apertur beschriebenen Verfahren zur Erzeugung eines Bildes des Objektes werden an anderer Stelle in der Literatur auch als holographische Bildgebung oder Interferenzbildgebung bezeichnet.

In einer Ausführungsform der Erfindung werden die Frequenzen der abgestrahlten elektromagnetischen Signale konstant gehalten, während in einer alternativen Ausführungsform die Frequenzen der elektromagnetischen Signale verändert werden, wobei zu keinem Zeitpunkt zwei Signale die gleiche Frequenz aufweisen.

Dies ermöglicht es beispielsweise, das Verfahren zur synthetischen Bildgebung gemäß einer Ausführungsform der vorliegenden Erfindung nach Art eines frequenzmodulierten Dauerstrichradars (FMCW-Radar, Frequency-Modulated Continuous Wave Radar) auszuführen. Dabei strahlen die Strahlungsquellen elektromagnetische Signale mit einer sich ständig ändernden Frequenz ab. Die Frequenz steigt beispielweise entweder linear an, um bei einer bestimmten Frequenz wieder abrupt auf den Anfangswert abzufallen (Sägezahnmuster) oder in einer anderen Ausführungsform steigt und fällt sie abwechselnd mit konstanter Änderungsgeschwindigkeit. Durch die lineare Änderung der Frequenz und durch das stetige Senden ist es möglich, die Geschwindigkeit des Objektes gegenüber der Strahlungsquelle und auch gleichzeitig deren absolute Entfernung voneinander zu bestimmen.

In einer weiteren Ausführungsform erfolgt die Änderung der Frequenzen der abgestrahlten elektromagnetischen Signale in diskreten Schritten. Für die Verbesserung der Bildqualität ist es bereits ausreichend die Messungen pro Strahlungsquelle mit einer kleinen Anzahl von unterschiedlichen Frequenzen auszuführen. Die bei einer kontinuierlichen Frequenzänderung für die Erfassung von zwischen zwei ausgezeichneten diskreten Frequenzen liegenden Frequenzen benötigte Messzeit kann für den Fall, dass nur bei diesen ausgezeichneten Frequenzen gemessen wird, für die Mittelung der Messungen bei den ausgezeichneten Frequenzen verwendet werden.

Während das erfindungsgemäße Verfahren in einer einfachen Ausführungsform zum inkohärenten Empfang der elektromagnetischen Signale vorgesehen sein kann, d.h. lediglich zur Erfassung der Amplituden der abgestrahlten elektromagnetischen Signale, erfolgt in einer alternativen Ausführungsform der Empfang der Signale mit den Empfängern auf kohärente Weise, so dass die Amplitude und die Phase der Signale bestimmt werden können.

Eine solche kohärente Erfassung der Signale erfolgt in einer Ausführungsform durch die Kopplung der für den Empfang verwendeten Lokaloszillatorsignale an die von den Strahlungsquellen abgestrahlten elektromagnetischen Signale.

In einer Ausführungsform der Erfindung erfolgt das Abstrahlen der ersten und zweiten elektromagnetischen Signale mit Hilfe folgender Schritte: Erzeugen eines ersten Senderzwischenfrequenzsignals mit einer ersten Senderzwischenfrequenz, Erzeugen eines zweiten Senderzwischenfrequenzsignals mit einer von der ersten Senderzwischenfrequenz verschiedenen Senderzwischenfrequenz. Dabei bestimmt der Frequenzabstand zwischen den Frequenzen des ersten und des zweiten Senderzwischenfrequenzsignals den Frequenzabstand der von den ersten und zweiten Strahlungsquellen abgestrahlten elektromagnetischen Signale. In einer Ausführungsform kann dabei das erste Senderzwischenfrequenzsignal ein "Vakuumsignal" ohne Frequenz und Leistung sein. Weiterhin wird ein Radiofrequenzsignal erzeugt, dessen Frequenz vorzugsweise groß gegenüber Senderzwischenfrequenzen ist und das dann den Frequenzbereich der abgestrahlten elektromagnetischen Signale festlegt. In dieser Ausführungsform wird nachfolgend das erste Senderzwischenfrequenzsignal mit dem Radiofrequenzsignal zu einem ersten Summen- und/oder Differenzsignal gemischt und das erste Summen- und/oder Differenzsignal wird als erstes elektromagnetisches Signal von der ersten Strahlungsquelle abgestrahlt. Darüber hinaus wird das zweite Senderzwischenfrequenzsignal ebenfalls mit dem Radiofrequenzsignal zu einem zweiten Summen- und/oder Differenzsignal gemischt und als zweites Signal von der zweiten Strahlungsquelle abgestrahlt.

In einer Ausführungsform liegt das Radiofrequenzsignal in einem Frequenzbereich von 800 MHz bis 10 THz, vorzugsweise von 30 GHz bis 1 THz und besonders bevorzugt bei etwa 100 GHz, d.h. im Frequenzbereich der abzustrahlenden elektromagnetischen Signale.

Dadurch dass das Radiofrequenzsignal mit ersten und zweiten Senderzwischenfrequenzsignalen mit verschiedenen Senderzwischenfrequenzen gemischt wird, weisen die von den ersten und zweiten Strahlungsquellen abgestrahlten Summen- und/oder Differenzsignale ebenfalls unterschiedliche Frequenzen auf. Dabei beträgt ist der Frequenzabstand der ersten und zweiten abgestrahlten Signale gleich dem Frequenzabstand der ersten und zweiten Zwischenfrequenzsignale.

In einer weiteren Ausführungsform des erfindungsgemäßen Verfahrens umfasst das Empfangen des ersten und des zweiten Signals mit einem Empfänger die folgenden Schritte: Erzeugen eines Radiofrequenzsignals, Mischen des Radiofrequenzsignals mit dem ersten und dem zweiten Signal zu einem Satz von Empfängerzwischenfrequenzsignalen.

In einer Ausführungsform der Erfindung werden die von den Strahlungsquellen abgestrahlten elektromagnetischen Signale in zwei Empfängern, vorzugsweise in allen Empfängern, mit dem gleichen Radiofrequenzsignal oder mit phasenstarr gekoppelten Radiofrequenzsignalen gemischt.

Stammen nun die Radiofrequenzsignale für das Abstrahlen der ersten und der zweiten elektromagnetischen Signale sowie die Radiofrequenzsignale für das Empfangen der Signale aus dem gleichen Generator, so sind das zum Empfang verwendete Radiofrequenzsignal, gewissermaßen der Lokaloszillator, und somit auch die erzeugten Empfängerzwischenfrequenzsignale phasenstarr an die von den Sendern abgestrahlten Signale gekoppelt. Auf diese Weise ist eine kohärente Signalerfassung einfach zu realisieren.

Die Frequenzen der Empfängerzwischenfrequenzsignale sind gleich den Frequenzen der ersten und zweiten Senderzwischenfrequenzsignal. Somit können alle von einem einzigen Empfänger durch Mischen der ersten und zweiten von den Strahlungsquellen abgestrahlten Signale mit dem Radiofrequenzsignal erzeugten Empfängerzwischenfrequenzsignale über ihre Frequenz eindeutig den jeweiligen Strahlungsquellen zugeordnet werden.

In einer bevorzugten Ausführungsform liegen die Frequenzen der Senderzwischenfrequenzsignale und/oder der Empfängerzwischenfrequenzsignale in einem Frequenzbereich von 100kHz bis 1 GHz, wobei die maximale Frequenzdifferenz zwischen den Frequenzen der beiden Senderzwischenfrequenzsignale die Detektionsbandbreite der Empfänger nicht übersteigen darf.

Die zuvor genannte Aufgabe wird auch durch eine Vorrichtung zur Erzeugung eines synthetischen Bildes eines Objektes gelöst, mit mindestens einer ersten und einer zweiten Strahlungsquelle, wobei die erste Strahlungsquelle für das Abstrahlen eines ersten elektromagnetischen Signals mit einer ersten Frequenz eingerichtet ist, wobei die zweite Strahlungsquelle für das Abstrahlen eines zweiten elektromagnetischen Signals mit einer zweiten Frequenz eingerichtet ist, wobei die erste und die zweite Frequenz voneinander verschieden sind, und mit mindestens zwei Empfängern, die so eingerichtet sind, dass jeder von ihnen im Wesentlichen gleichzeitig das erste und das zweite Signal empfängt, wobei die Vorrichtung einen Signalgenerator für ein Radiofrequenzsignal aufweist, wobei jeder Empfänger eine Empfangsantenne und einen Mischer aufweist, wobei die Empfangsantenne so eingerichtet ist, dass sie von den Strahlungsquellen abgestrahlten Signale empfängt und wobei der Mischer so eingerichtet ist, dass er die von der Empfangsantenne empfangenen Signale mit dem Radiofrequenzsignal mischt, sodass ein Satz von Empfängerzwischenfrequenzsignalen erzeugt wird, wobei alle Empfänger mit einem einzigen Radiofrequenzsignalgenerator verbunden sind, wobei die Vorrichtung einen Rechner mit einem Demultiplexer aufweist, der so eingerichtet ist, dass er jeden Satz von Empfängerzwischenfrequenzsignalen in seine spektralen Frequenzbestandteile zerlegt und auswertet, und wobei der Rechner so eingerichtet ist, dass er ein Bild, das mit einer synthetischen Apertur gewonnen wurde, aus den Empfängerzwischenfrequenzsignalen berechnet und das Bild abspeichert oder auf einem Bildschirm anzeigt.

Dabei ist die erfindungsgemäße Vorrichtung nicht auf zwei Strahlungsquellen bzw. Empfänger beschränkt, sondern weist in einer Ausführungsform mehr als zwei, vorzugsweise je 64, Strahlungsquellen und/oder Empfänger auf. Diese sind in einer Ausführungsform so eingerichtet, dass die abgestrahlten Signale alle voneinander verschiedene Frequenzen aufweisen.

In einer Ausführungsform sind die Strahlungsquellen so eingerichtet, dass die abgestrahlten elektromagnetischen Signale in einem Frequenzbereich von 800 MHz bis 10 THz, vorzugsweise von 30 GHz bis 1 THz und besonders bevorzugt bei etwa 200 GHz liegen.

Dabei sind in einer Ausführungsform die Strahlungsquellen und die Empfänger zur Durchführung des zuvor beschriebenen erfindungsgemäßen Verfahrens eingerichtet.

in einer Ausführungsform weist die erfindungsgemäße Vorrichtung einen Radiofrequenzsignalgenerator für ein Radiofrequenzsignal auf.

In einer weiteren Ausführungsform weist jede Strahlungsquelle einen Zwischenfrequenzsignalgenerator, einen Mischer und eine Sendeantenne auf, wobei der Zwischenfrequenzsignalgenerator zur Erzeugung eines Zwischenfrequenzsignals mit einer Senderzwischenfrequenz eingerichtet ist, wobei alle Senderzwischenfrequenzen voneinander verschieden sind, wobei der Mischer so eingerichtet ist, dass er ein Differenz- und/oder Summensignal aus dem Radiofrequenzsignal und dem Zwischenfrequenzsignal bildet und wobei die Sendeantenne so eingerichtet ist, dass sie das Differenz- und/oder Summensignal abstrahlt.

Jeder Empfänger weist in einer Ausführungsform der Erfindung eine Empfangsantenne und einen Mischer auf, wobei die Empfangsantenne so eingerichtet ist, dass sie die von den Strahlungsquellen abgestrahlten Signale empfängt und wobei der Mischer so eingerichtet ist, dass er die von der Empfangsantenne empfangenen Signale mit dem Radiofrequenzsignal mischt, so dass ein Satz von Empfängerzwischenfrequenzsignalen erzeugt wird.

In einer Ausführungsform sind sowohl die Mischer aller Strahlungsquellen als auch die Mischer aller Empfänger mit dem gleichen Radiofrequenzsignalgenerator verbunden, so dass eine Vorrichtung zur kohärenten Erfassung der abgestrahlten Signale bereitgestellt wird.

In einer Ausführungsform werden die Sendeantenne und die Empfangsantenne eines Paares aus einer Strahlungsquelle und einem Empfänger von einer einzigen Antenne mit einem Richtkoppler gebildet.

In einer Ausführungsform sind alle Strahlungsquellen und Empfänger in einer Ebene angeordnet, um eine gute Abdeckung des k-Raumes zu ermöglichen. Dabei ist beispielsweise eine Anordnung zweckmäßig, bei der die Strahlungsquellen und die Empfänger in Form eines Kreuzes, eines Plus-Zeichens oder eines Rechtecks (vorzugsweise eines Quadrats) angeordnet sind, wobei vorzugsweise die Strahlungsquellen auf einer oder mehreren ersten Geraden liegen und die Empfänger auf einer oder mehreren zu den ersten Geraden senkrechten zweiten Geraden liegen.

Das erfindungsgemäße Verfahren und die entsprechende Vorrichtung eignen sich insbesondere zur Verwendung in Vorrichtungen zur Materialüberprüfung und zur Sicherheitskontrolle von Personen, beispielsweise zur Erfassung von versteckten Sprengstoffen und Waffen. Dazu kann die erfindungsgemäße Vorrichtung beispielsweise in ein Sicherheitsportal für einen Flughafen oder eine Fahrzeugtür eingebaut sein.

Weitere Vorteile, Merkmale und Anwendungsmöglichkeiten der vorliegenden Erfindung werden anhand der folgenden Beschreibung einer Ausführungsform und der dazugehörigen Figur deutlich.

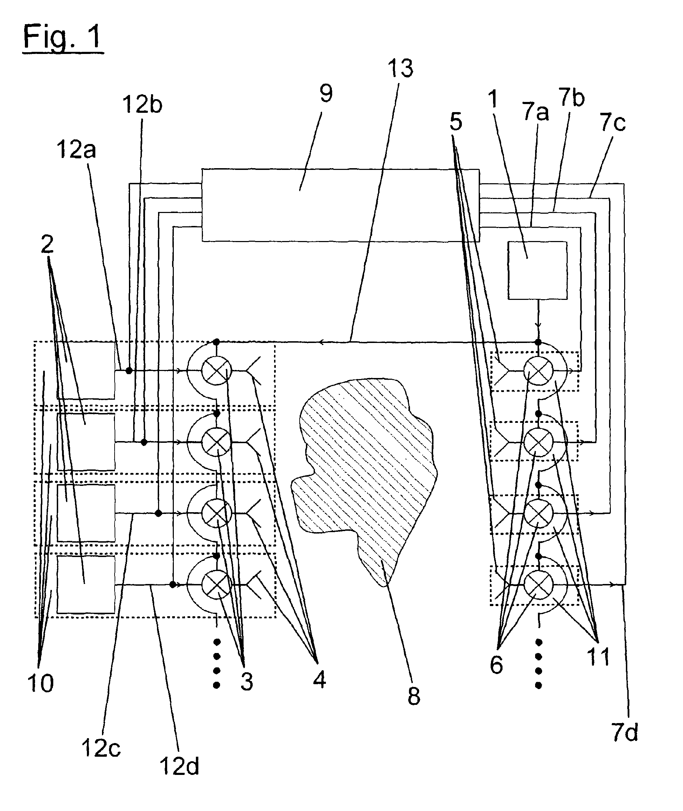

- Figur 1: zeigt den schematischen Aufbau einer erfindungsgemäßen Vorrichtung zur Erzeugung eines synthetischen Bildes eines Objektes.

Die schematisch in Figur 1 dargestellte Ausführungsform der erfindungsgemäßen Vorrichtung zur Erzeugung eines synthetischen Bildes weist insgesamt jeweils vierundsechzig Sender bzw. Strahlungsquellen 10 und Empfänger 11 auf. Dabei sind in der schematischen Darstellung lediglich jeweils vier Strahlungsquellen 10 und Empfänger 11 explizit dargestellt, während die analoge Fortsetzung des Systems mit weiteren Strahlungsquellen und Empfängern durch schwarze Punkte angedeutet ist.

In der dargestellten Ausführungsform ist ein Objekt 8 zwischen den Strahlungsquellen 10 und Empfängern 11 angeordnet, so dass je nach Position des Objekts 8 in Bezug auf die Strahlungsquellen 10 und Empfänger 11 von den Empfängern 11 die durch das Objekt 8 transmittierte oder von dem Objekt 8 reflektierte Strahlung erfasst wird.

Zur Steuerung der Vorrichtung und zur Datenerfassung bzw. Bilderzeugung weist das System einen Rechner 9 auf.

Jede Strahlungsquelle 10 weist einen Signalgenerator 2 zur Erzeugung eines Senderzwischenfrequenzsignals 12 sowie einen Mischer 3 und eine Sendeantenne 4 auf. Darüber hinaus ist jede Strahlungsquelle 10 mit einem Signalgenerator 1 zur Erzeugung eines Radiofrequenzsignals 13 mit einer Frequenz von 300 GHz verbunden. Die Mischer 3 einer jeden Strahlungsquelle 10 dienen dazu, das Radiofrequenzsignal 13 mit einem entsprechenden Senderzwischenfrequenzsignal 12 zu mischen. Das dabei erzeugte Mischsignal wird mit Hilfe der Sendeantenne 4 von der Strahlungsquelle 10 abgestrahlt.

In der dargestellten Ausführungsform sind die Mischer 3 sogenannte Einseitenbandmischer, die ein Signal erzeugen, welches lediglich die Summenfrequenz aus der Frequenz des Radiofrequenzsignals 13 und dem Senderzwischenfrequenzsignal 12 enthält. Jedes der von den Signalgeneratoren 2 der Strahlungsquellen 10 erzeugte Zwischensignal 12a, 12b, 12c, 12d, ... weist eine von den anderen Zwischenfrequenzen verschiedene Frequenz auf. In der dargestellten Ausführungsform beträgt die erste Zwischenfrequenz 12a 2 MHz, die zweite Zwischenfrequenz 12b 4 MHz, 12c 6 MHz, die vierte Zwischenfrequenz 12d 8 MHz usw. Da die Mischer 3 der Strahlungsquellen 10 jeweils nur das Summensignal aus dem Radiofrequenzsignal 13 und den Senderzwischenfrequenzsignalen 12 erzeugt, weisen auch die von den Antennen 2 abgestrahlten elektromagnetischen Signale, welche das Objekt 8 beleuchten, die gleichen Frequenzabstände wie die Senderzwischenfrequenzsignale auf.

In einer alternativen, nicht dargestellten Ausführungsform erzeugen die Einseitenbandmischer 3 jeweils nur das Differenzsignal zwischen dem Radiofrequenzsignal 13 und den entsprechenden Senderzwischenfrequenzsignalen 12. Entscheidend ist dabei nur, dass die Mischer 3 keine zwei identischen oder überlappenden Frequenzen erzeugen und eine eindeutige Zuordnung der von den Strahlungsquellen 10 abgestrahlten elektromagnetischen Signale zu den einzelnen Strahlungsquellen 10 gewährleistet bleibt.

In einer weiteren, ebenfalls nicht dargestellten Ausführungsform werden zwei benachbarte Mischer 3 mit dem Signal eines einzigen Zwischenfrequenzgenerators 2 versorgt, wobei der erste Mischer 3 ein Seitenbandmischer ist, welcher lediglich die Differenzfrequenz aus dem Radiofrequenzsignal 13 und dem Senderzwischenfrequenzsignal erzeugt, während der zweite Mischer 3 ein Einseitenbandmischer ist, der lediglich die Summenfrequenz aus dem Radiofrequenzsignal und dem Senderzwischenfrequenzsignal erzeugt. Auch könnte in einer weiteren Ausführungsform die Antenne 3 einer ersten Strahlungsquelle 10 ummittelbar mit dem Radiofrequenzsignal 13 gespeist werden, während alle anderen abgestrahlten Signale durch Mischprozesse erzeugt werden, da auch in diesem Fall eine eindeutige Zuordenbarkeit der Signale zu den Strahlungsquellen 10 über die Frequenz der abgestrahlten elektromagnetischen Signale möglich ist.

Die von den Signalgeneratoren 2 erzeugten Zwischenfrequenzsignale 12 werden von dem Rechner 9 erfasst, um nachfolgend bei der Detektion eine Zuordnung der einzelnen empfangenen Signale zu den Quellen 10 zu ermöglichen. Dazu sind die Signalausgänge der Generatoren 2 mit dem Rechner 9 verbunden.

Die in Figur 1 ebenfalls dargestellten Empfänger 11 weisen einen zu den Strahlungsquellen 10 ähnlichen Aufbau auf. Jeder der Empfänger 11 besteht aus einer Empfangsantenne 5 sowie einem Mischer 6. Die Mischer 6 der Empfänger 11 sind jeweils mit den entsprechenden Empfangsantennen 5 sowie mit dem Signalgenerator 1 verbunden. Die Mischer 6 der Empfänger 11 sind Einseitenbandmischer, welche Zwischenfrequenzsignale mit der Differenzfrequenz zwischen dem Radiofrequenzsignal 13 und dem von den Empfangsantennen 5 empfangenen Signalen bilden.

Jeder der Empfänger 11 weist eine Detektionsbandbreite auf, welche dem maximalen Frequenzabstand zweier Senderzwischenfrequenzsignale der Generatoren 2 entspricht. Da jede der Empfangsantennen 5 alle von den Strahlungsquellen 10 abgestrahlten Signale empfängt und diese Signale von den Mischern 6 mit dem Radiofrequenzsignal 13 gemischt werden, enthalten die Empfängerzwischenfrequenzsignale 7a, 7b, 7c, 7d,... aller Empfänger 11 Signalanteile bei allen Frequenzen der Senderzwischenfrequenzsignale 12a, 12b, 12c, 12d, ..., soweit sie durch das Objekt 8 transmittiert bzw. von dem Objekt 8 reflektiert wurden und auf die entsprechende Empfangsantenne 5 gelangt sind. Jeder Signalausgang 7a, 7b, 7c, 7d, ... enthält somit einen Satz von Zwischenfrequenzsignalen, die eindeutig einer der Strahlungsquellen 10 zugeordnet werden können.

Die Empfängerzwischenfrequenzsignale 7a, 7b, 7c, 7d,... sind mit dem Rechner 9 verbunden. Dieser weist für jeden Empfänger 11 einen entsprechenden Demultiplexer auf, der es ermöglicht jeden Satz von Empfängerzwischensignalen, so wie er von dem jeweiligen Empfänger 11 erzeugt wird, in seine spektralen Frequenzbestandteile zu zerlegen und auszuwerten.

Mit Hilfe der bekannten Algorithmen zur Berechnung eines Bildes, das mit einer synthetischen Apertur gewonnen wurde, wird im Rechner 9 aus den Empfängerzwischenfrequenzsignalen 7a, 7b, 7c, 7d, ... ein entsprechendes Bild des Objektes 8 berechnet und abgespeichert oder dem Benutzer des Systems auf einem Bildschirm dargestellt.

Dabei werden gleichzeitig mit allen Empfängern 11 Bilder des Objekts 8 aus allen Beleuchtungsrichtungen, die durch die Positionen der Strahlungsquellen 10 definiert sind, erfasst.

Für Zwecke der ursprünglichen Offenbarung wird darauf hingewiesen, dass sämtliche Merkmale, wie sie sich aus der vorliegenden Beschreibung, der Zeichnung und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet. Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus der Zeichnung, der Beschreibung und den beigefügten Ansprüchen offensichtlich. In den Ansprüchen schließt das Wort "aufweisen" nicht andere Elemente oder Schritte aus, und der unbestimmte Artikel "ein" oder "eine" schließt eine Mehrzahl nicht aus. Auch wird das Vorhandensein von mehr als zwei Strahlungsquellen und Empfängern durch das Zahlwort "zwei" in den Ansprüchen nicht ausgeschlossen. Die bloße Tatsache, dass bestimmte Merkmale in unterschiedlichen Ansprüche beansprucht sind, schließt ihre Kombination nicht aus. Bezugszeichen in den Ansprüchen sind nicht als Beschränkung des Schutzbereiches gedacht.

### Bezugszeichenliste

- 1: Signalgenerator für das Radiofrequenzsignal 13
- 2: Signalgenerator für ein Zwischenfrequenzsignal 12
- 3: Mischer
- 4: Sendeantenne
- 5: Empfangsantenne
- 6: Mischer
- 7: Empfängerzwischenfrequenzsignale
- 8: Objekt
- 9: Rechner
- 10: Strahlungsquelle
- 11: Empfänger
- 12a: erstes Zwischenfrequenzsignal
- 12b: zweites Zwischenfrequenzsignal
- 12c: drittes Zwischenfrequenzsignal
- 12d: viertes Zwischenfrequenzsignal
- 13: Radiofrequenzsignal

## Patentansprüche

1. Verfahren zur synthetischen Bildgebung mit den Schritten,
Abstrahlen eines ersten elektromagnetischen Signals mit einer ersten Frequenz von einer ersten Strahlungsquelle (10),
Abstrahlen mindestens eines zweiten elektromagnetischen Signals mit einer zweiten Frequenz von einer zweiten Strahlungsquelle (10) und
im Wesentlichen gleichzeitiges Empfangen des ersten Signals und des zweiten Signals mit einem ersten Empfänger (11) und
im Wesentlichen gleichzeitiges Empfangen des ersten Signals und des zweiten Signals mit mindestens einem zweiten Empfänger (11),
wobei die mindestens zwei Strahlungsquellen und die mindestens zwei Empfänger räumlich getrennt voneinander angeordnet sind,
**dadurch gekennzeichnet, dass**
die erste und die zweite Frequenz voneinander verschieden sind und das Empfangen des ersten Signals und des zweiten Signals mit einem ersten Empfänger (11) und einem zweiten Empfänger (11) die folgenden Schritte aufweist,
Erzeugen eines einzigen Radiofrequenzsignals (13),
Mischen des Radiofrequenzsignals (13) in dem ersten Empfänger (11) mit dem ersten und dem zweiten Signal zu einem ersten Satz von Empfängerzwischenfrequenzsignalen (7a, 7b, 7c, 7d, ...),
Mischen des Radiofrequenzsignals (13) in dem zweiten Empfänger (11) mit dem ersten und dem zweiten Signal zu einem zweiten Satz von Empfängerzwischenfrequenzsignalen (7a, 7b, 7c, 7d, ...),
Zerlegen und Auswerten der spektralen Frequenzbestandteile jedes Satzes von Empfängerzwischenfrequenzsignalen (7a, 7b, 7c, 7d, ...) mit einem Demultiplexer in einem Rechner (9) und
Berechnen eines Bildes, das mit einer synthetischen Apertur gewonnen wurde, in dem Rechner (9) aus den Empfängerzwischenfrequenzsignalen (7a, 7b, 7c, 7d, ...) und Abspeichern des Bildes oder Anzeigen des Bildes auf einem Bildschirm.

2. Verfahren nach Anspruch 1, **dadurch gekennzeichnet, dass** der erste und der zweite Empfänger (11) miteinander phasengekoppelt werden.

3. Verfahren nach Anspruch 1 oder 2, **dadurch gekennzeichnet, dass** die erste und die zweite Strahlungsquelle (10) und der erste und der zweite Empfänger (11) miteinander phasengekoppelt werden.

4. Verfahren nach einem der Ansprüche 1 bis 3, darüber hinaus mit folgenden Schritten Anordnen eines Objektes (8) auf dem Pfad mindestens eines elektromagnetischen Signals zwischen den Strahlungsquellen (10) und den Empfängern (11), wobei die Signale von dem Objekt reflektiert werden bevor sie auf die Empfänger treffen, und
Berechnen eines Bildes des Objektes (8) aus den von den Empfängern (11) empfangenen Signalen.

5. Verfahren nach einem der Ansprüche 1 bis 4, **dadurch gekennzeichnet, dass** die Signale von den Empfängern (11) kohärent empfangen werden, wobei die Amplitude und/oder die Phase der Signale bestimmt wird.

6. Verfahren nach einem der Ansprüche 1 bis 5, **dadurch gekennzeichnet, dass** die Frequenzen der abgestrahlten elektromagnetischen Signale konstant gehalten werden.

7. Verfahren nach einem der Ansprüche 1 bis 6, **dadurch gekennzeichnet, dass** die Frequenzen der elektromagnetischen Signale, vorzugsweise schrittweise, verändert werden, wobei zu keinem Zeitpunkt zwei Signale die gleiche Frequenz aufweisen.

8. Verfahren nach einem der Ansprüche 1 bis 7, **dadurch gekennzeichnet, dass** das Abstrahlen des ersten und des zweiten elektromagnetischen Signals die folgenden Schritte aufweist,
Erzeugen eines ersten Senderzwischenfrequenzsignals (12a) mit einer ersten Senderzwischenfrequenz,
Erzeugen eines zweiten Senderzwischenfrequenzsignals (12b) mit einer von der ersten Senderzwischenfrequenz verschiedenen Senderzwischenfrequenz,
Erzeugen eines Radiofrequenzsignals (13),
Mischen des ersten Senderzwischenfrequenzsignals (12a) mit dem Radiofrequenzsignal (13) zu einem ersten Summen- und/oder Differenzsignal und Abstrahlen des ersten Summen- und/oder Differenzsignals als erste elektromagnetisches Signal von der ersten Strahlungsquelle (10) und
Mischen des zweiten Senderzwischenfrequenzsignals (12b) mit dem Radiofrequenzsignal zu einem zweiten Summen- und/oder Differenzsignal und Abstrahlen des zweiten Summen- und/oder Differenzsignals als zweites elektromagnetisches Signal von der zweiten Strahlungsquelle (10).

9. Vorrichtung zur synthetischen Bildgebung
mit mindestens einer ersten und einer zweiten Strahlungsquelle (10), wobei die erste Strahlungsquelle (10) für das Abstrahlen eines ersten elektromagnetischen Signals mit einer ersten Frequenz eingerichtet ist, wobei die zweite Strahlungsquelle (10) für das Abstrahlen eines zweites elektromagnetischen Signals mit einer zweiten Frequenz eingerichtet ist, und
mit mindestens zwei Empfängern (11), die so eingerichtet sind, dass jeder von ihnen im Wesentlichen gleichzeitig das erste und das zweite Signal empfängt,
wobei die mindestens zwei Strahlungsquellen und die mindestens zwei Empfänger räumlich getrennt voneinander angeordnet sind,
**dadurch gekennzeichnet, dass**
die erste und die zweite Frequenz von einander verschieden sind,
wobei die Vorrichtung einen Signalgenerator (1) für ein Radiofrequenzsignal (13) aufweist,
wobei jeder Empfänger (11) eine Empfangsantenne (5) und einen Mischer (6) aufweist, wobei die Empfangsantenne (5) so eingerichtet ist, dass sie die von den Strahlungsquellen (10) abgestrahlten Signale empfängt und wobei der Mischer (6) so eingerichtet ist, dass er die von der Empfangsantenne (5) empfangenen Signale mit dem Radiofrequenzsignal (13) mischt, so dass ein Satz von Empfängerzwischenfrequenzsignalen (7a, 7b, 7c, 7d, ...) erzeugt wird,
wobei alle Empfänger (11) mit einem einzigen Radiofrequenzsignalgenerator (1) verbunden sind,
wobei die Vorrichtung einen Rechner (9) mit einem Demultiplexer aufweist, der so eingerichtet ist, dass er jeden Satz von Empfängerzwischenfrequenzsignalen (7a, 7b, 7c, 7d, ...) in seine spektralen Frequenzbestandteile zerlegt und auswertet, und
wobei der Rechner (9) so eingerichtet ist, dass er ein Bild, das mit einer synthetischen Apertur gewonnen wurde, aus den Empfängerzwischenfrequenzsignalen (7a, 7b, 7c, 7d, ...) berechnet und das Bild abspeichert oder auf einem Bildschirm anzeigt.

10. Vorrichtung nach Anspruch 9, **dadurch gekennzeichnet, dass** jede Strahlungsquelle (10) einen Zwischenfrequenzsignalgenerator (2), einen Mischer (3) und eine Sendeantenne (4) aufweist, wobei der Zwischenfrequenzsignalgenerator (2) zur Erzeugung eines Senderzwischenfrequenzsignals (12a, 12b, 12c, 12d,...) mit einer Senderzwischenfrequenz eingerichtet ist, wobei alle Senderzwischenfrequenzen voneinander verschieden sind,
wobei der Mischer (3) so eingerichtet ist, dass er ein Differenz- und/oder Summensignal aus dem Radiofrequenzsignal (13) und dem Senderzwischenfrequenzsignal (12a, 12b, 12c, 12d,...) bildet und wobei die Sendeantenne (4) so eingerichtet ist, dass sie das Differenz- und/oder Summensignal abstrahlt.

11. Vorrichtung zur Materialüberprüfung und/oder Sicherheitskontrolle von Personen mit einer Vorrichtung zur synthetischen Bildgebung nach einem der Ansprüche 9 oder 10.

## Claims

1. A method of synthetic imaging comprising the steps,
emitting a first electromagnetic signal having a first frequency from a first radiation source (10),
emitting at least one second electromagnetic signal having a second frequency from a second radiation source (10), and
substantially simultaneously receiving the first signal and the second signal with a first receiver (11), and
substantially simultaneously receiving the first signal and the second signal with at least one second receiver (11),
wherein the at least two radiation sources and the at least two receivers are arranged spacially apart from each other,
**characterised in that**
the first and second frequencies are different from each other and receiving of the first signal and of the second signal with a first receiver (11) and a second receiver (11) comprises the following steps,
producing a single radio frequency signal (13),
mixing the radio frequency signal (13) in the first receiver (11) with the first and second signals to afford a first set of receiver intermediate frequency signals (7a, 7b, 7c, 7d, ...),
mixing the radio frequency signal (13) in the second receiver (11) with the first and second signals to afford a second set of receiver intermediate frequency signals (7a, 7b, 7c, 7d, ...),
disassembling and evaluating of the spectral frequency parts of each set of receiver intermediate frequency signals (7a, 7b, 7c, 7d, ...) with a demultiplexer in a computer (9), and
computing an image in the computer (9) which has been gained from the receiver intermediate frequency signals (7a, 7b, 7c, 7d, ...) by means of a synthetic aperture and saving the image or displaying the image on a screen.

2. A method as set forth in claim 1, **characterised in that** the first and second receivers (11) are phase-coupled to each other.

3. A method as set forth in claim 1 or claim 2, **characterised in that** the first and second radiation sources (10) and the first and second receivers (11) are phase-coupled to each other.

4. A method as set forth in one of claims 1 through 3 and further including the steps arranging an object (8) on the path of at least one electromagnetic signal between the radiation sources (10) and the receivers (11), wherein the signals are reflected by the object before they meet the receivers, and
computing an image of the object (8) from the signals received by the receivers (11).

5. A method as set forth in one of claims 1 through 4, **characterised in that** the signals are coherently received by the receivers (11), wherein the amplitude and/or the phase of the signals is determined.

6. A method as set forth in one of claims 1 through 5, **characterised in that** the frequencies of the emitted electromagnetic signals are kept constant.

7. A method as set forth in one of claims 1 through 6, **characterised in that** the frequencies of the electromagnetic signals are altered, preferably stepwise, wherein at no point in time two signals do have the same frequency.

8. A method as set forth in one of claims 1 through 7, **characterised in that** emission of the first and second electromagnetic signals comprises the following steps,
producing a first transmitter intermediate frequency signal (12a) having a first transmitter intermediate frequency,
producing a second transmitter intermediate frequency signal (12b) having a transmitter intermediate frequency different from the first transmitter intermediate frequency, producing a radio frequency signal (13),
mixing the first transmitter intermediate frequency signal (12a) with the radio frequency signal (13) to afford a first sum and/or difference signal and emitting the first sum and/or difference signal as the first electromagnetic signal from the first radiation source (10), and
mixing the second transmitter intermediate frequency signal (12b) with the radio frequency signal to afford a second sum and/or difference signal and emitting the second sum and/or difference signal as the second electromagnetic signal from the second radiation source (10).

9. Apparatus for synthetic imaging comprising
at least a first and a second radiation source (10), wherein the first radiation source (10) is adapted to emit a first electromagnetic signal having a first frequency, wherein the second radiation source (10) is adapted to emit a second electromagnetic signal having a second frequency, and
at least two receivers (11) which are so adapted that each of them substantially simultaneously receives the first and second signals,
wherein the at least two radiation sources and the at least two receivers are arranged spacially apart from each other,
**characterised in that**
the first and second frequencies are different from each other,
wherein the apparatus has a radio frequency signal generator (1) for a radio frequency signal (13),
wherein each receiver (11) has a receiving antenna (5) and a mixer (6), wherein the receiving antenna (5) is so adapted that it receives the signals emitted by the radiation source (10) and wherein the mixer (6) is so adapted that it mixes the signals received from the receiving antenna (5) with the radio frequency signal (13) so that a set of receiver intermediate frequency signals (7a, 7b, 7c, 7d, ...) is generated,
wherein all receivers (11) are connected to a single radio frequency signal generator (1),
wherein the apparatus comprises a computer (9) with a demultiplexer which is so adapted that it disassembles and evaluates each set of receiver intermediate frequency signals (7a, 7b, 7c, 7d, ...) in its spectral frequency parts, and
wherein the computer (9) is so adapted that it computes an image which has been gained from the receiver intermediate frequency signals (7a, 7b, 7c, 7d, ...) by means of a synthetic aperture and saves the image or displays the image on a screen.

10. Apparatus as set forth in claim 9, **characterised in that** each radiation source (10) has an intermediate frequency signal generator (2), a mixer (3) and a transmitting antenna (4), wherein the intermediate frequency signal generator (2) is adapted to generate a transmitter intermediate frequency signal (12a, 12b, 12c, 12d, ...) having a transmitter intermediate frequency, wherein all transmitter intermediate frequencies are different from each other, wherein the mixer (3) is so adapted that it forms a difference and/or sum signal from the radio frequency signal (13) and the transmitter intermediate frequency signal (12a, 12b, 12c, 12d,...) and wherein the transmitting antenna (4) is so adapted that it emits the difference and/or sum signal.

11. Apparatus for material examination and/or security checking of people with an apparatus for synthetic imaging as set forth in one of claims 9 or 10.

## Revendications

1. Procédé de formation d'images à synthèse d'ouverture, comprenant les étapes suivantes :
émission d'un premier signal électromagnétique à une première fréquence par une première source de rayonnement (10),
émission d'un deuxième signal électromagnétique à une deuxième fréquence par une deuxième source de rayonnement (10), et
réception du premier signal et du deuxième signal sensiblement simultanément au moyen d'un premier récepteur (11), et
réception du premier signal et du deuxième signal sensiblement simultanément au moyen d'au moins un deuxième récepteur (11),
lesdites sources de rayonnement, au moins au nombre de deux, et lesdits récepteurs, au moins au nombre de deux, étant séparés spatialement les uns des autres,
**caractérisé en ce que**
les première et deuxième fréquences sont différentes l'une de l'autre et la réception du premier signal et du deuxième signal au moyen d'un premier récepteur (11) et d'un deuxième récepteur (11) comprend les étapes suivantes :
produire un signal radiofréquence (13) unique,
mélanger le signal radiofréquence (13) dans le premier récepteur (11) avec le premier et le deuxième signal pour former un premier ensemble de signaux de fréquence intermédiaire de récepteur (7a, 7b, 7c, 7d, ....),
mélanger le signal radiofréquence (13) dans le deuxième récepteur (11) avec le premier et le deuxième signal pour former un deuxième ensemble de signaux de fréquence intermédiaire de récepteur (7a, 7b, 7c, 7d, ....),
décomposer et évaluer les composantes spectrales de fréquence de chaque ensemble de signaux de fréquence intermédiaire de récepteur (7a, 7b, 7c, 7d, ....) au moyen d'un démultiplexeur dans un calculateur (9), et
calculer une image, acquise avec une synthèse d'ouverture, dans le calculateur (9) à partir des signaux de fréquence intermédiaire de récepteur (7a, 7b, 7c, 7d, ....) et
stocker l'image ou afficher l'image sur un écran.

2. Procédé selon la revendication 1, **caractérisé en ce que** les premier et deuxième récepteurs (11) sont mutuellement verrouillés en phase.

3. Procédé selon la revendication 1 ou 2, **caractérisé en ce que** la première et la deuxième source de rayonnement (10) et le premier et le deuxième récepteur (11) sont mutuellement verrouillés en phase.

4. Procédé selon l'une des revendications 1 à 3, comprenant, en outre, les étapes suivantes :
disposer un objet (8) sur la voie d'au moins un signal électromagnétique entre les sources de rayonnement(10) et les récepteurs (11), les signaux étant réfléchis par l'objet avant d'atteindre les récepteurs, et
calculer une image de l'objet (8) à partir des signaux reçus par les récepteurs (11).

5. Procédé selon l'une des revendications 1 à 4, **caractérisé en ce que** les signaux sont reçus de manière cohérente par les récepteurs (11), l'amplitude et/ou la phase des signaux étant déterminée.

6. Procédé selon l'une des revendications 1 à 5, **caractérisé en ce que** les fréquences des signaux électromagnétiques émis sont maintenues constantes.

7. Procédé selon l'une des revendications 1 à 6, **caractérisé en ce que** l'on fait varier les fréquences des signaux électromagnétiques, de préférence progressivement, deux signaux n'ayant à aucun moment la même fréquence.

8. Procédé selon l'une des revendications 1 à 7, **caractérisé en ce que** l'émission du premier et du deuxième signal électromagnétique comprend les étapes suivantes :
produire un premier signal de fréquence intermédiaire d'émetteur (12a) à une première fréquence intermédiaire d'émetteur,
produire un deuxième signal de fréquence intermédiaire d'émetteur (12b) à une fréquence intermédiaire d'émetteur différente de la première fréquence intermédiaire d'émetteur,
produire un signal radiofréquence (13),
mélange du premier signal de fréquence intermédiaire d'émetteur (12a) avec le signal radiofréquence(13) pour former un premier signal de somme et/ou différence, et émission du premier signal de somme et/ou différence en tant que premier signal électromagnétique par la première source de rayonnement (10), et
mélange du deuxième signal de fréquence intermédiaire d'émetteur (12b) avec le signal radiofréquence pour former un deuxième signal de somme et/ou différence, et émission du deuxième signal de somme et/ou différence en tant que deuxième signal électromagnétique par la deuxième source de rayonnement (10).

9. Dispositif de formation d'images à synthèse d'ouverture,
comprenant au moins une première et une deuxième source de rayonnement (10), la première source de rayonnement (10) étant conçue pour l'émission d'un premier signal électromagnétique à une première fréquence, la deuxième source de rayonnement (10) étant conçue pour l'émission d'un deuxième signal électromagnétique à une deuxième fréquence, et
comprenant au moins deux récepteurs (11), conçus de façon telle que chacun d'eux reçoit le premier et le deuxième signal sensiblement simultanément,
lesdites sources de rayonnement, au moins au nombre de deux, et lesdits récepteurs, au moins au nombre de deux, étant séparés spatialement les uns des autres,
**caractérisé en ce que**
les première et deuxième fréquences sont différentes l'une de l'autre,
le dispositif étant doté d'un générateur de signaux (1) pour un signal radiofréquence (13),
chaque récepteur (11) présentant une antenne réceptrice (5) et un mélangeur (6), l'antenne réceptrice (5) étant conçue de façon à recevoir les signaux émis par les sources de rayonnement (10) et le mélangeur (6) étant conçu de façon à mélanger les signaux reçus par l'antenne réceptrice (5) avec le signal radiofréquence (13) de façon à produire un ensemble de signaux de fréquence intermédiaire de récepteur (7a, 7b, 7c, 7d, ....),
tous les récepteurs (11) étant reliés à un générateur de signaux radiofréquence (1) unique,
le dispositif comportant un calculateur (9) doté d'un démultiplexeur, qui est conçu de façon à décomposer chaque ensemble de signaux de fréquence intermédiaire de récepteur (7a, 7b, 7c, 7d, ....) en ses composantes spectrales de fréquence et à les évaluer, et le calculateur (9) étant conçu de façon à calculer une image, acquise avec une synthèse d'ouverture, à partir des signaux de fréquence intermédiaire de récepteur (7a, 7b, 7c, 7d, ....) et à stocker l'image ou afficher l'image sur un écran.

10. Dispositif selon la revendication 9, **caractérisé en ce que** chaque source de rayonnement (10) présente un générateur de signaux de fréquence intermédiaire (2), un mélangeur (3) et une antenne émettrice (4), le générateur de signaux de fréquence intermédiaire (2) étant conçu pour produire un signal de fréquence intermédiaire d'émetteur (12a, 12b, 12c, 12d ....) à une fréquence intermédiaire d'émetteur, toutes les fréquences intermédiaires d'émetteur étant différentes les unes des autres, le mélangeur (3) étant conçu pour former un signal de différence et/ou de somme à partir du signal radiofréquence (13) et du signal de fréquence intermédiaire d'émetteur (12a, 12b, 12c, 12d ....) et l'antenne émettrice (4) étant conçue pour émettre le signal de différence et/ou de somme.

11. Dispositif destiné au contrôle de matériaux et/ou contrôle de sécurité de personnes au moyen d'un dispositif de formation d'images à synthèse d'ouverture selon la revendication 9 ou 10.
